# EUROPÄISCHE PATENTSCHRIFT

(11) **EP 2 774 789 B1**
(45) Veröffentlichungstag und Bekanntmachung des Hinweises auf die Patenterteilung: **08.01.2020**
(21) Anmeldenummer: 14156791.7
(22) Anmeldetag: 26.02.2014
(51) Int. Cl.: B60H 1/00, B60H 1/14, F25B 30/02

(54) **Heizvorrichtung für eine mobile Arbeitsmaschine**
Heating device for a mobile working machine
Dispositif de chauffage pour machine de travail mobile

(30) Priorität: 07.03.2013 DE 102013102267
(43) Veröffentlichungstag der Anmeldung: 10.09.2014
(73) Patentinhaber: STILL GmbH, 22113 Hamburg (DE)
(72) Erfinder: Howey, Ansgar, 22926 Ahrensburg (DE)
(74) Vertreter: Patentship Patentanwaltsgesellschaft mbH

(56) Entgegenhaltungen:
- DE-A1- 2 539 565
- DE-A1- 10 158 104
- DE-A1- 19 728 026
- US-A1- 2003 050 150

## Beschreibung

Die Erfindung betrifft ein Flurförderzeug, das batterie-elektrisch angetrieben ist, mit einer Heizvorrichtung, die mit einem Heizwärmetauscher versehen ist, wobei das Flurförderzeug einen Hydraulikkreislauf einer Arbeitshydraulik des Flurförderzeugs aufweist, wobei die Arbeitshydraulik einen Hubzylinder umfasst, der eine Lastgabel an einem Hubmast anhebt.

Viele mobile Arbeitsmaschinen und insbesondere Flurförderzeuge weisen eine Fahrerkabine auf, um den Fahrer der mobilen Arbeitsmaschine vor Witterungseinflüssen, vor allem Regen, zu schützen. Bei mobilen Arbeitsmaschinen besteht dabei im Regelfall die Möglichkeit, die Fahrerkabine zu beheizen, um die Arbeitsbedingungen des Fahrers zu verbessern, wenn die mobile Arbeitsmaschine in einem Freigelände ganzjährig eingesetzt wird. Ein Beispiel solcher mobiler Arbeitsmaschinen sind Flurförderzeuge und insbesondere Gabelstapler bzw. Gegengewichtsgabelstapler, die auf Betriebsgeländen sowohl innerhalb von Lagerhallen, wie auch auf Freigeländen eingesetzt werden.

Viele mobile Arbeitsmaschinen und insbesondere Flurförderzeuge sind dabei batterieelektrische Fahrzeuge, die keinen Verbrennungsmotor aufweisen und somit auch im Regelfall keinen Flüssigkeitskühlkreis eines Verbrennungsmotors. Bei diesen wird oftmals als Heizsystem eine Luft-Gebläse Heizung eingesetzt, bei der erwärmte Luft in den Fahrerkabinenraum geblasen wird und die Erwärmung der Luft durch ein elektrisches Heizelement als Heizwärmetauscher erfolgt.

Nachteilig an diesem Stand der Technik ist jedoch, dass die Nutzung der elektrischen, in einer Traktionsbatterie gespeicherten Energie für Heizzwecke zu einer erheblichen Reduzierung der Reichweite und Arbeitsdauer mit einer Batterieladung führt.

Zur Vermeidung dieser starken Reduzierung der Reichweite und des hohen Energieverbrauchs bei direkter Beheizung durch elektrischen Strom ist es bekannt, für die Erwärmung der Luft eine Wärmepumpe einzusetzen, die als Wärmequelle die Umgebungsluft über einen Luftwärmetauscher nutzt. Ein bekanntes Beispiel hierfür ist, eine Klimaanlage einzusetzen, deren Kondensator als Heizwärmetauscher für die Kabineninnenluft dient. Soweit die Wirkungsweise der Wärmepumpe auch umgekehrt werden kann, kann dadurch gleichzeitig auch eine Kühlmöglichkeit für die Fahrerkabine vorgesehen werden.

Nachteilig an diesem Stand der Technik ist, dass der Wirkungsgrad einer Wärmepumpe stark von der Temperatur der Wärmequelle abhängt. Gerade bei niedrigen Außentemperaturen in einem Freigelände und folglich starkem Heizbedarf für eine Fahrerkabine steht jedoch in Form der Umgebungsluft nur eine Wärmequelle mit sehr niedriger Temperatur zur Verfügung. Dies verschlechtert wiederum den Wirkungsgrad und führt zu einem erhöhten Energieverbrauch sowie einer schnelleren Entleerung der Traktionsbatterie bei einem Batterie-elektrisch angetriebenen Fahrzeug.

Bekannt sind Hybridfahrzeuge für den Straßenverkehr, die durch eine Kombination aus Verbrennungsmotor und Elektromotor angetrieben werden und zumindest für den Verbrennungsmotor, aber auch eventuell für weitere Komponenten einen Kühlwasserkreislauf aufweisen. Für die Klimatisierung des Fahrgastraumes ist bei diesen Fahrzeugen es denkbar, eine kombinierte Heiz-/Kühleinheit einzusetzen die als Wärmepumpe in zwei Richtungen arbeiten kann und insbesondere für die Beheizung des Fahrgastraumes Wärme dem Kühlwasserkreislauf als Wärmequelle entnehmen kann.

Nachteilig an diesem Stand der Technik ist, dass er nicht bei batterieelektrisch angetriebenen mobilen Arbeitsmaschinen und insbesondere nicht bei Flurförderzeugen eingesetzt werden kann, da bei diesen im Regelfall kein Kühlwasserkreislauf vorhanden ist.

Mobile Arbeitsmaschinen und insbesondere Flurförderzeuge, beispielsweise Gabelstapler mit einer Hubvorrichtung, weisen im Regelfall Arbeitsvorrichtungen und Komponenten auf, die hydraulisch angetrieben werden und bei denen eine im Falle eines batterieelektrischen Fahrzeuges durch einen Elektromotor angetriebene Hydraulikpumpe Druckmittel aus einem Tank fördert, das bei einem Verbraucher Arbeitsleistung erbringt und danach in den Tank zurückfließt.

Aus der DE 101 58 104 A1 ist eine Wärme- und Klimatisierungsvorrichtung für ein Fahrzeug mit Verbrennungsmotor bekannt, bei dem sowohl über eine Klimaanlage als Wärmepumpe Wärme aus Schmierstoffen und Getriebeöl entnommen wird, als auch an diese abgegeben wird.

Der vorliegenden Erfindung liegt die Aufgabe zugrunde, ein Flurförderzeug zur Verfügung zu stellen, das batterieelektrisch angetrieben wird und eine beheizte Fahrerkabine bzw. temperaturabhängig beheizte Bauteile aufweist, wobei die oben genannten Nachteile vermieden werden und der Energieverbrauch optimiert ist.

Diese Aufgabe wird durch ein Flurförderzeug mit den Merkmalen des unabhängigen Patentanspruchs 1 gelöst. Vorteilhafte Weiterbildungen der Erfindung sind in den Unteransprüchen angegeben.

Die Aufgabe wird erfindungsgemäß dadurch gelöst, dass das Flurförderzeug, das batterie-elektrisch angetrieben ist, eine Heizvorrichtung aufweist, die mit einem Heizwärmetauscher versehen ist, wobei das Flurförderzeug einen Hydraulikkreislauf einer Arbeitshydraulik des Flurförderzeugs aufweist, wobei die Arbeitshydraulik einen Hubzylinder umfasst, der eine Lastgabel an einem Hubmast anhebt, wobei als Wärmequelle für den Heizwärmetauscher der Hydraulikkreislauf genutzt wird, wobei der Heizwärmetauscher mit einer Wärmepumpe beheizt wird, die als Wärmequelle den Hydraulikkreislauf über einen Hydraulikkreiswärmetauscher nutzt.

Das Druckmittel des Hydraulikkreislaufes, im Regelfall ein Hydrauliköl, wird beim Betrieb eines Flurförderzeugs bis zu einem mittleren Temperaturbereich erwärmt. Beispielsweise können sich Temperaturniveaus bis zu ca. 65 °C ergeben. Vorteilhaft steht dadurch eine höhere Temperatur als Ausgangstemperatur zur Verfügung, bzw. ist es auch denkbar, eventuell direkt mit dem Druckmittel des Hydraulikkreislaufes den Heizwärmetauscher zu erwärmen. Dadurch ergibt sich eine erhebliche Reduzierung des Energiebedarfs, der der Traktionsbatterie eines batterieelektrisch angetriebenen Flurförderzeugs entnommen werden muss. Entsprechend erhöht sich die Reichweite bzw. Betriebsdauer mit einer geladenen Traktionsbatterie. Durch die Heizvorrichtung kann jeglicher Heizbedarf gedeckt werden, beispielsweise auch das Erwärmen von Hochleistungsbatterien nach Inbetriebnahme eines Fahrzeugs bis zu einer Mindestbetriebstemperatur, wie etwa bei Lithium-Ionenbatterien. Ebenfalls ist es denkbar, durch die Heizvorrichtung auch eine Leistungselektronik nach der Inbetriebnahme des Flurförderzeugs bis zum Erreichen einer optimalen Betriebstemperatur zu erwärmen. Durch eine Wärmepumpe kann der für die Heizung einer Wärmequelle zu entnehmende Wärmebedarf erheblich vermindert werden. Indem als Wärmequelle der Hydraulikkreislauf herangezogen wird, kann gegenüber der Nutzung der Umgebungsluft eine Wärmequelle mit einer erheblich höheren Temperatur genutzt werden. Dies ergibt eine hohe Effizienzsteigerung der Wärmepumpe.

Vorteilhaft dient der Heizwärmetauscher zur Erwärmung der Luft einer Fahrerkabine.

Für das Beheizen einer Fahrerkabine im Betrieb im Freien bei kalten Außentemperaturen und die sich hieraus ergebenden Komfortvorteile wird eine erhebliche Heizwärme benötigt. Die vorgeschlagene Lösung wirkt sich daher hier besonders vorteilhaft auf den Energieverbrauch und somit die Betriebsdauer mit einer Batterieladung aus.

Vorteilhaft ist als weitere Wärmequelle für die Wärmepumpe ein Urngebungsluftwärmetauscher vorgesehen.

Durch die Nutzung der Abwärme des Hydraulikkreislaufes darf das Druckmittel nicht zu stark abgekühlt werden, um Nachteile bei Verschleiß und Wirkungsgrad der Hydraulik zu vermeiden. Deshalb ist es vorteilhaft, zusätzlich eine alternative Wärmequelle vorzusehen bzw. diese kombiniert zu nutzen, beispielsweise auch abgestuft in Reihe nacheinander nach den Temperaturniveaus. So kann beispielsweise zunächst bis zu einem Temperaturniveau der Umgebungsluft diese genutzt werden und zur weiteren Erwärmung nach der Umgebungsluft der Hydraulikkreislauf. Durch diese beiden Wärmequellen kann beispielsweise im Gegenstrom bzw. aufeinanderfolgend ein Verdampfer einer Klimaanlage als Wärmepumpe erwärmt werden. Wenn das Temperaturniveau in dem Hydrauliksystem und/oder die gelieferte Wärmemenge des Hydrauliksystems nicht ausreicht, so kann auch allein die Umgebungsluft als Wärmequelle genutzt werden, wenn auch mit verminderten Wirkungsgrad.

In einer günstigen Weiterbildung der Heizvorrichtung können der Hydraulikkreiswärmetauscher und der Umgebungsluftwärmetauscher über einen Wasserkreislauf mit der Wärmepumpe, insbesondere mit einem Wärmetauscher der Wärmepumpe, verbunden sein, wobei die Aufteilung des Wasserdurchlaufs zwischen Hydraulikkreiswärmetauscher und Umgebungsluftwärmetauscher durch eine Ventileinrichtung regelbar ist.

Vorteilhaft ist der Hydraulikkreiswärmetauscher in einem Druckmitteltank des Hydraulikkreislaufes angeordnet.

Der Hydraulikkreiswärmetauscher kann ein interner Wärmetauscher der Wärmepumpe sein und der Umgebungsluftwärmetauscher über einen Wasserkreislauf mit der Wärmepumpe, insbesondere mit einem Wärmetauscher der Wärmepumpe, verbunden sein.

Dadurch wird die Wärme des Hydraulikkreislaufs über den Hydraulikkreiswärmetauscher direkt der Wärmepumpe zugeführt, während Wärme aus dem Umgebungsluftwärmetauscher über einen Wasserzwischenkreis und einen weiteren Wärmetauscher in der Wärmepumpe dieser zugeführt wird.

Vorteilhaft ist der Hydraulikkreiswärmetauscher ein interner Wärmetauscher der Wärmepumpe und ist der Umgebungsluftwärmetauscher über den Hydraulikkreislauf mit dem Hydraulikkreiswärmetauscher verbunden.

In einer günstigen Ausgestaltung der Heizvorrichtung ist die Aufteilung des Druckmitteldurchlaufs durch den Hydraulikkreiswärmetauscher aus dem Umgebungsluftwärmetauscher im Verhältnis zu dem übrigen Hydraulikkreislauf durch eine Ventileinrichtung regelbar.

Dadurch kann vorteilhaft und kostengünstig ein bereits vorhandener Kühler für das Druckmittel des Hydraulikkreislaufs genutzt werden, der Abwärme des Hydraulikkreislaufs an die Umgebungsluft abgibt. Durch die Ventileinrichtung kann auf einfache Art und Weise sowie beispielsweise temperaturabhängig geregelt werden, in welchem Anteil Wärme dem Hydraulikkreislaufs entnommen werden kann, um als Wärmequelle der Wärmepumpe zu dienen und in wieweit Wärme aus dem Umgebungsluftwärmetauscher zugeführt wird.

Die Arbeitsrichtung der Wärmepumpe kann umkehrbar sein und der Heizwärmetauscher gekühlt werden.

Dies ermöglicht eine weitere Erhöhung des Komforts insbesondere bei einer Klimatisierung bzw. Temperaturregelung einer Fahrerkabine, indem ein Kühlen der Fahrerkabine ermöglicht wird. Hierbei wird zum Beispiel und bevorzugt der Umgebungsluftwärmetauscher als Wärmesenke eingesetzt, wobei es jedoch auch denkbar ist, Abwärme an das Hydrauliksystem abzugeben, wenn die Temperatur des Druckmittels noch nicht zu hoch ist.

Vorteilhaft kann die Temperatur des Druckmittels in dem Hydraulikkreislauf durch einen neutralen Umlauf und/oder einen Umlauf des Druckmittels gegen eine Drossel angehoben werden.

Dies ermöglicht auf sehr einfache Art und Weise für kurzfristige Spitzenlasten bzw. nach einer Inbetriebnahme des Fahrzeugs bei noch kaltem Druckmittel die Heizleistung zu erhöhen, da im Regelfall das Hydrauliksystem bereits einen neutralen Umlauf aufweist.

Weitere Vorteile und Einzelheiten der Erfindung werden anhand der in den schematischen Figuren dargestellten Ausführungsbeispiele näher erläutert. Hierbei zeigt
- Fig. 1: ein Flurförderzeug, das mit einer erfindungsgemäßen Heizvorrichtung ausgestattet ist,
- Fig. 2: ein Schema eines ersten Ausführungsbeispiels einer erfindungsgemäßen Heizvorrichtung.
- Fig. 3: ein Schema eines zweiten Ausführungsbeispiels einer erfindungsgemäßen Heizvorrichtung und
- Fig. 4: ein Schema eines dritten Ausführungsbeispiels einer erfindungsgemäßen Heizvorrichtung.

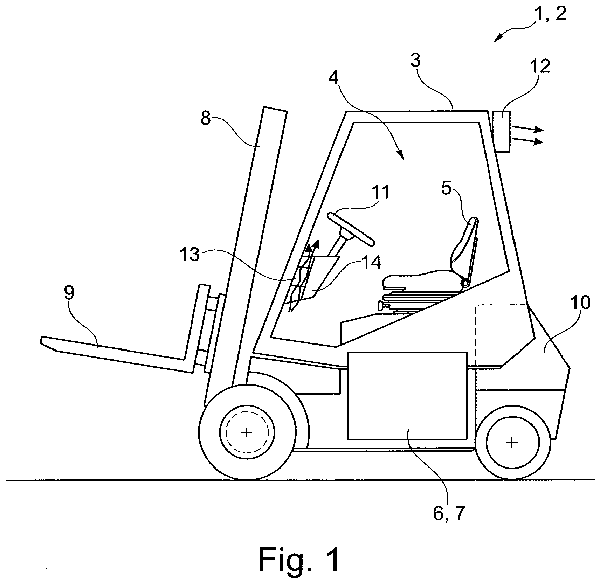

Die Fig. 1 zeigt ein Flurförderzeug mit einer erfindungsgemäßen Heizvorrichtung, das hier als Gegengewichtsgabelstapler 2, ausgebildet ist, mit einer Fahrerkabine 3, in der sich ein Fahrerarbeitsplatz 4 mit einem Fahrersitz 5 befindet. Der Gegengewichtsgabelstapler 2 weist als batterie-elektrisch angetriebenes Fahrzeug, das über nicht dargestellte Elektromotoren angetrieben wird, zur Energieversorgung einen elektrischen Energiespeicher 6 auf, der beispielsweise als Lithiumionenbatterie 7 ausgebildet ist. An einem Hubmast 8 ist eine Lastgabel 9 zur Aufnahme einer Last angeordnet, wobei das Gewicht dieser Last durch ein Gegengewicht 10 ausgeglichen wird. Der Fahrerarbeitsplatz 4 weist ein Lenkrad 11 auf. Ein Umgebungsluftwärmetauscher 12 ist an der Dachrückseite der Fahrerkabine 3 angeordnet und nimmt Wärme aus der Umgebungsluft auf, die wie durch Pfeile angedeutet, diesen durchströmt. Ein Heizwärmetauscher 13 ist in einer Konsole 14 der Fahrerkabine 3 angeordnet und wird, wie durch die Pfeile dargestellt, von der Luft im Inneren der Fahrerkabine 3 durchströmt. Die Lastgabel 9 kann an dem Hubmast 8 durch einen nicht dargestellten hydraulischen Hubzylinder angehoben werden, der Teil einer Arbeitshydraulik mit einem Hydraulikkreislaufs des Gegengewichtsgabelstaplers 2 ist.

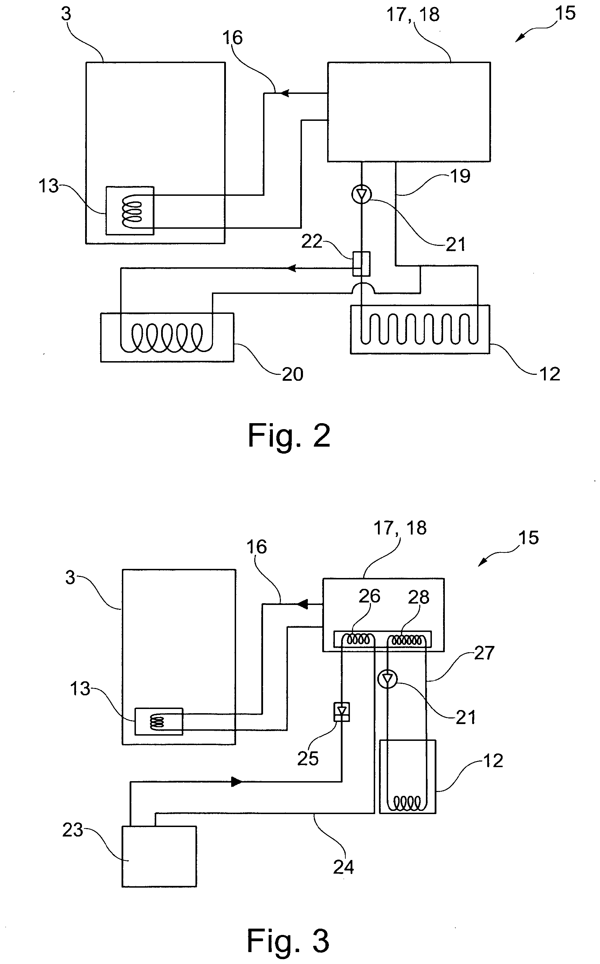

Die Fig. 2 zeigt ein Schema eines ersten Ausführungsbeispiels einer erfindungsgemäßen Heizvorrichtung 15. Die Fahrerkabine 3 weist den Heizwärmetauscher 13 auf, der über einen Wasserkreislauf 16 von einer Wärmepumpe 17 beheizt wird, die als Klimaanlage 18 ausgebildet ist. Über einen weiteren Wasserkreislauf 19 ist die Wärmepumpe 17 mit dem Umgebungsluftwärmetauscher 12 und einem Hydraulikkreiswärmetauscher 20 verbunden, der in einem Druckmitteltank des Hydraulikkreislaufs angeordnet sein kann. Das Wasser in dem weiteren Wasserkreislauf 19 wird durch eine Umwälzpumpe 21 umgewälzt und über eine Ventileinrichtung 22 kann der Anteil des Wassers, der den Hydraulikkreiswärmetauscher 20 durchströmt, gegenüber dem Anteil des Wassers, das den Umgebungsluftwärmetauscher 12 durchströmt, geregelt werden bis hin zu einem alleinigen Durchströmen eines der beiden Wärmetauscher 12,20.

Wenn die Temperatur des Hydrauliköls als Druckmittel in dem Hydraulikkreislauf hoch genug ist und nicht zu befürchten ist, dass die Temperatur zu weit absinkt, so kann der Klimaanlage 18 als Wärmepumpe 17 allein aus dem Hydraulikkreiswärmetauscher 20 Wärmeenergie zugeführt werden. Wenn jedoch die zur Verfügung stehende Wärmeenergie in dem Hydraulikkreislaufwärmetauscher 20 nicht ausreichend ist, so kann der Wärmepumpe 17 auch Wärme aus dem Umgebungsluftwärmetauscher 12 zugeführt werden. Umgekehrt kann, wenn die Wärmepumpe 17 auch einen umgekehrten Betrieb ermöglicht, der Innenraum der Fahrerkabine 3 gekühlt werden durch den Heizwärmetauscher 13 und die Abwärme über den Umgebungsluftwärmetauscher 12 an die Umgebungsluft abgegeben werden.

Die Fig. 3 zeigt ein Schema eines zweiten Ausführungsbeispiels einer erfindungsgemäßen Heizvorrichtung 15. Dabei sind zu den Komponenten des Ausführungsbeispiels der Fig. 1 identische Bauteile mit denselben Bezugszeichen versehen. Die Fahrerkabine 3 mit dem Heizwärmetauscher 13 wird über den Wasserkreislauf 16 von einer Wärmepumpe 17 bzw. der Klimaanlage 18 beheizt. Ein Hydraulikkreislauf 23 ist über eine Druckmittelleitung 24, in die ein Vorratsbehälter 25 eingefügt ist, mit einem Hydraulikkreislaufwärmetauscher 26 verbunden, der in die Wärmepumpe 17 integriert ist. Über einen weiteren Wasserkreislauf 27 mit der Umwälzpumpe 21 ist der Umgebungsluftwärmetauscher 12 mit einem weiteren Wärmetauscher 28 der Wärmepumpe 17 verbunden. Bei diesem Ausführungsbeispiel ist die Zuführung der Wärmeenergie aus dem Hydraulikkreislauf 23 vollständig von der Zuführung der Wärmeenergie aus dem Umgebungsluftwärmetauscher 12 getrennt.

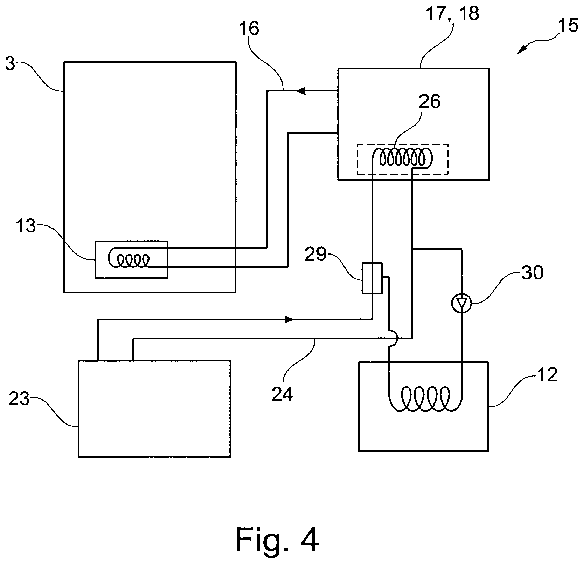

Die Fig. 4 zeigt ein Schema eines dritten Ausführungsbeispiels einer erfindungsgemäßen Heizvorrichtung 15. Die Fahrerkabine 3 mit dem Heizwärmetauscher 13 wird über den Wasserkreislauf 16 von einer Wärmepumpe 17 bzw. der Klimaanlage 18 beheizt. Der Hydraulikkreislauf 23 ist über die Druckmittelleitung 24 mit dem Hydraulikkreislaufwärmetauscher 26 verbunden, der in die Wärmepumpe 17 integriert ist. Durch eine Ventileinrichtung 29 und eine Druckmittelumwälzpumpe 30 ist der Umgebungsluftwärmetauscher 12 in die Druckmittelleitung 24 als Teil des Hydraulikkreislaufs 23 integriert. Somit kann der Umgebungsluftwärmetauscher 12 Energie aus der Umgebungsluft der Wärmepumpe 17 zuführen, wenn die Temperatur des Druckmittels eine erlaubte Mindesttemperatur unterschreitet, so dass in diesem Fall nur noch Energie aus der Umgebungsluft der Wärmepumpe 17 zugeführt wird.

Diese Lösung ist insbesondere dann kostengünstig und einfach umzusetzen, wenn der Hydraulikkreislauf 23 bereits einen Umgebungsluftwärmetauscher 12 für die Kühlung des Druckmittels aufweist.

## Patentansprüche

1. Flurförderzeug, das batterie-elektrisch angetrieben ist, mit einer Heizvorrichtung, die mit einem Heizwärmetauscher (13) versehen ist, wobei das Flurförderzeug einen Hydraulikkreislauf (23) einer Arbeitshydraulik des Flurförderzeugs aufweist, wobei die Arbeitshydraulik einen Hubzylinder umfasst, der eine Lastgabel (9) an einem Hubmast (8) anhebt,
**dadurch gekennzeichnet,**
**dass** als Wärmequelle für den Heizwärmetauscher (13) der Hydraulikkreislauf (23) genutzt wird, wobei der Heizwärmetauscher (13) mit einer Wärmepumpe (17) beheizt wird, die als Wärmequelle den Hydraulikkreislauf (23) über einen Hydraulikkreiswärmetauscher (20,26) nutzt.

2. Flurförderzeug nach Anspruch 1,
**dadurch gekennzeichnet,**
**dass** der Heizwärmetauscher (13) zur Erwärmung der Luft einer Fahrerkabine (3) dient.

3. Flurförderzeug nach Anspruch 1 oder 2,
**dadurch gekennzeichnet,**
**dass** als weitere Wärmequelle für die Wärmepumpe (17) ein Umgebungsluftwärmetauscher (12) vorgesehen ist.

4. Flurförderzeug nach Anspruch 3,
**dadurch gekennzeichnet,**
**dass** der Hydraulikkreiswärmetauscher (20) und der Umgebungsluftwärmetauscher (12) über einen Wasserkreislauf (19) mit der Wärmepumpe (17), insbesondere mit einem Wärmetauscher der Wärmepumpe, verbunden sind, wobei die Aufteilung des Wasserdurchlaufs zwischen Hydraulikkreiswärmetauscher (20) und Umgebungsluftwärmetauscher (12) durch eine Ventileinrichtung (22) regelbar ist.

5. Flurförderzeug nach Anspruch 4,
**dadurch gekennzeichnet,**
**dass** der Hydraulikkreiswärmetauscher (20) in einem Druckmitteltank des Hydraulikkreislaufes angeordnet ist.

6. Flurförderzeug nach Anspruch 3,
**dadurch gekennzeichnet,**
**dass** der Hydraulikkreiswärmetauscher (26) ein interner Wärmetauscher der Wärmepumpe (17) ist und der Umgebungsluftwärmetauscher (12) über einen Wasserkreislauf (27) mit der Wärmepumpe (17), insbesondere mit einem Wärmetauscher (28) der Wärmepumpe (17), verbunden ist.

7. Flurförderzeug nach Anspruch 3,
**dadurch gekennzeichnet,**
**dass** der Hydraulikkreiswärmetauscher (26) ein interner Wärmetauscher der Wärmepumpe (17) ist und der Umgebungsluftwärmetauscher (26) über den Hydraulikkreislauf (23) mit dem Hydraulikkreiswärmetauscher (26) verbunden ist.

8. Flurförderzeug nach Anspruch 7,
**dadurch gekennzeichnet,**
**dass** die Aufteilung des Druckmitteldurchlaufs durch den Hydraulikkreiswärmetauscher (26) aus dem Umgebungsluftwärmetauscher (12) im Verhältnis zu dem übrigen Hydraulikkreislauf (12) durch eine Ventileinrichtung (29) regelbar ist.

9. Flurförderzeug nach einem der Ansprüche 1 bis 8,
**dadurch gekennzeichnet,**
**dass** die Arbeitsrichtung der Wärmepumpe (17) umkehrbar ist und der Heizwärmetauscher (13) gekühlt werden kann.

10. Flurförderzeug nach einem der Ansprüche 1 bis 9,
**dadurch gekennzeichnet,**
**dass** die Temperatur des Druckmittels in dem Hydraulikkreislauf (23) durch einen neutralen Umlauf und/oder einen Umlauf des Druckmittels gegen eine Drossel angehoben werden kann.

## Claims

1. Industrial truck, which is battery-electrically driven, having a heating device which is provided with a heating heat exchanger (13), wherein the industrial truck has a hydraulic circuit (23) of working hydraulics of the industrial truck, wherein the working hydraulics comprise a lifting cylinder which lifts a lifting fork (9) on a lifting mast (8)
**characterized in that**
the hydraulic circuit (23) is used as a heat source for the heating heat exchanger (13), wherein the heating heat exchanger (13) is heated with a heat pump (17), which uses the hydraulic circuit (23) as a heat source via a hydraulic circuit heat exchanger (20, 26).

2. Industrial truck according to Claim 1,
**characterized in that**
the heating heat exchanger (13) is used to heat the air of a driver's cab (3).

3. Industrial truck according to Claim 1 or 2,
**characterized in that**
an ambient air heat exchanger (12) is provided as a further heat source for the heat pump (17).

4. Industrial truck according to Claim 3,
**characterized in that**
the hydraulic circuit heat exchanger (20) and the ambient air heat exchanger (12) are connected to the heat pump (17), in particular to a heat exchanger of the heat pump, via a water circuit (19), wherein the division of the water flow between hydraulic circuit heat exchanger (20) and ambient air heat exchanger (12) can be controlled by a valve device (22).

5. Industrial truck according to Claim 4,
**characterized in that**
the hydraulic circuit heat exchanger (20) is arranged in a pressure medium tank of the hydraulic circuit.

6. Industrial truck according to Claim 3,
**characterized in that**
the hydraulic circuit heat exchanger (26) is an internal heat exchanger of the heat pump (17), and the ambient air heat exchanger (12) is connected to the heat pump (17), in particular to a heat exchanger (28) of the heat pump (17), via a water circuit (27).

7. Industrial truck according to Claim 3,
**characterized in that**
the hydraulic circuit heat exchanger (26) is an internal heat exchanger of the heat pump (17), and the ambient air heat exchanger (26) is connected to the hydraulic circuit heat exchanger (26) via the hydraulic circuit (23).

8. Industrial truck according to Claim 7,
**characterized in that**
the division of the pressure medium flow through the hydraulic heat exchanger (26) out of the ambient air heat exchanger (12) in relation to the remaining hydraulic circuit (12) can be controlled via a valve device (29).

9. Industrial truck according to one of Claims 1 to 8,
**characterized in that**
the working direction of the heat pump (17) is reversible, and the heating heat exchanger (13) can be cooled.

10. Industrial truck according to one of Claims 1 to 9,
**characterized in that**
the temperature of the pressure medium in the hydraulic circuit (23) can be raised by a neutral circulation and/or by a circulation of the pressure medium against a throttle.

## Revendications

1. Chariot élévateur, alimenté par batterie, comprenant un dispositif de chauffage muni d'un échangeur de chaleur de chauffage (13), le chariot élévateur comportant un circuit hydraulique (23) d'un système hydraulique de travail du chariot élévateur, le système hydraulique de travail comprenant un cylindre de levage qui soulève une fourche de charge (9) sur un mât de levage (8),
**caractérisé en ce que** le circuit hydraulique (23) est utilisé comme source de chaleur pour l'échangeur de chaleur de chauffage (13), l'échangeur de chaleur de chauffage (13) étant chauffé avec une pompe à chaleur (17) qui utilise le circuit hydraulique (23), par le biais d'un échangeur de chaleur de système hydraulique (20, 26), comme source de chaleur.

2. Chariot élévateur selon la revendication 1,
**caractérisé en ce que**
l'échangeur de chaleur de chauffage (13) sert à chauffer l'air d'une cabine de conduite (3).

3. Chariot élévateur selon la revendication 1 ou 2,
**caractérisé en ce que**
un échangeur de chaleur à air ambiant (12) est prévu comme source de chaleur supplémentaire pour la pompe à chaleur (17).

4. Chariot élévateur selon la revendication 3,
**caractérisé en ce que**
l'échangeur de chaleur du système hydraulique (20) et l'échangeur de chaleur à air ambiant (12) sont reliés par un circuit d'eau (19) à la pompe à chaleur (17), en particulier à un échangeur de chaleur de la pompe à chaleur, la répartition du flux d'eau entre l'échangeur de chaleur de système hydraulique (20) et l'échangeur de chaleur à air ambiant (12) peut être régulée par un dispositif à soupape (22).

5. Chariot élévateur selon la revendication 4,
**caractérisé en ce que**
l'échangeur de chaleur de système hydraulique (20) est disposé dans un réservoir de fluide sous pression du circuit hydraulique.

6. Chariot élévateur selon la revendication 3,
**caractérisé en ce que**
l'échangeur de chaleur de système hydraulique (26) est un échangeur de chaleur interne de la pompe à chaleur (17) et l'échangeur de chaleur à air ambiant (12) est relié par un circuit d'eau (27) à la pompe à chaleur (17), en particulier à un échangeur de chaleur (28) de la pompe à chaleur (17).

7. Chariot élévateur selon la revendication 3,
**caractérisé en ce que**
l'échangeur de chaleur de système hydraulique (26) est un échangeur de chaleur interne de la pompe à chaleur (17) et l'échangeur de chaleur à air ambiant (26) est relié à l'échangeur de chaleur de système hydraulique (26) par le biais du circuit hydraulique (23).

8. Chariot élévateur selon la revendication 7,
**caractérisé en ce que**
la répartition du fluide sous pression à travers l'échangeur de chaleur de système hydraulique (26) à partir de l'échangeur de chaleur à air ambiant (12) par rapport au circuit hydraulique restant (12) peut être régulée par un dispositif à soupape (29).

9. Chariot élévateur selon l'une des revendications 1 à 8,
**caractérisé en ce que**
le sens de fonctionnement de la pompe à chaleur (17) est réversible et l'échangeur de chaleur de chauffage (13) peut être refroidi.

10. Chariot élévateur selon l'une des revendications 1 à 9,
**caractérisé en ce que**
la température du fluide sous pression dans le circuit hydraulique (23) peut être élevée par une circulation neutre et/ou par une circulation du fluide sous pression en opposition à un étranglement.
